# FASCICULE DE BREVET EUROPEEN

(11) **EP 0 555 598 B1**
(45) Date de publication et mention de la délivrance du brevet: **04.06.1997**
(21) Numéro de dépôt: 92400356.9
(22) Date de dépôt: 11.02.1992
(51) Int. Cl.: C02F 1/76, C02F 1/68, C02F 1/461

(54) **Composition pour la désinfection de l'eau par le procédé d'électrochloration et utilisation de cette composition**
Verbindung zur Desinfizierung von Wasser durch Elektrochlorierung und Verwendung dieser Verbindung
Composition for disinfecting water by means of electrochlorination and use of this composition

(43) Date de publication de la demande: 18.08.1993
(73) Titulaire: COMPAGNIE DES SALINS DU MIDI ET DES SALINES DE L'EST, Société Anonyme dite, F-75008 Paris (FR)
(72) Inventeur: Heurtebise, Franck, Résidence Terrasse de, F-34000 Montpellier (FR); Teissedre, Pierre, F-30240 Port Camargue (FR)
(74) Mandataire: Jolly, Jean-Pierre

(56) Documents cités:
- FR-A- 2 670 198
- PATENT ABSTRACTS OF JAPAN vol. 11, no. 246 (C-439)11 Août 1987
- DATABASE WPIL, abrégé no. 81-31736D [18] Derwent Publications Ltd., London, GB;

## Description

L'invention concerne une nouvelle composition pour la désinfection de l'eau par le procédé d'électrochloration. L'invention concerne également l'utilisation de cette composition pour la désinfection de l'eau par le procédé d'électrochloration.

On sait que, pour la désinfection des eaux, notamment des eaux de piscines, on utilise un procédé permettant de produire, in situ, par électrolyse d'une solution saline de chlorure, du chlore naissant se transformant immédiatement en hypochlorite.

A titre d'exemples non limitatifs, on peut citer les applications suivantes :
- eaux de piscine,
- eaux de refroidissement industriel,
- solutions désinfectantes pour le traitement des plages,
- traitement de désodorisation d'eaux résiduaires urbaines.

Dans la pratique, pour une piscine, par exemple, la solution saline à électrolyser est préparée directement dans le bassin par dissolution d'une quantité de composé chloruré telle que la concentration obtenue soit de l'ordre de 0,3 à 0,8 % en poids, exprimé en NaCl, selon l'électrolyseur utilisé.

On emploie généralement, pour ce faire, un sel (chlorure de sodium) répondant aux impératifs suivants :
- teneur minimale en composés alcalino-terreux,
- très faibie teneur en matières insolubles dans l'eau,
- très faible teneur en matières organiques oxydables,
- très faible teneur en fer, cuivre et manganèse, de façon à optimiser le rendement électrolytique et prévenir les risques de corrosion.

Cependant, il est bien connu que le rayonnement ultraviolet entraîne la destruction photochimique de l'ion hypochlorite, ce qui nuit considérablement à l'efficacité du traitement désinfectant.

La présente invention vise à remédier à cet inconvénient en traitant le sel utilisé avec un agent stabilisant du chlore.

A cet effet, l'invention a pour objet une composition pour la désinfection de l'eau par le procédé d'électrochloration, cette composition comprenant au moins un chlorure alcalin et étant caractérisée en ce qu'elle contient, comme agent stabilisant du chlore vis-à-vis du rayonnement ultraviolet, de l'acide isocyanurique.

Ainsi, au cours de sa dissolution, le sel libère le stabilisant, qui :
- joue le rôle de filtre des ultraviolets ;
- s'associe avec le chlore formé par électrolyse de la solution saline pour engendrer des composés chlorés actifs, insensibles au rayonnement ultraviolet.

L'invention a donc également pour but l'utilisation de cette composition pour la désinfection de l'eau par le procédé d'électrochloration.

La quantité de stabilisant libéré par la dissolution du sel permet ainsi d'optimiser l'efficacité désinfectante du procédé d'électrochloration.

La demande de brevet japonais JP-A-62 053 902 (voir Patent Abstracts of Japan , vol. 11, N° 246 (C-439) 11 Août 1987) avait déjà proposé d'utiliser de l'acide isocyanurique, mais en combinaison avec un acide carboxylique et, de préférence, avec de l'oxyde de magnésium, du carbonate de magnésium, de l'oxyde de calcium, de l'hydroxyde de magnésium ou de l'hydroxyde de calcium, pour stabiliser du chlore résiduel dans une solution. Il ne s'agissait cependant pas de chlore naissant obtenu par électrochloration in situ d'un chlorure alcalin, et le rôle de filtre des rayons ultraviolets n'avait pas été mis en évidence par cette publication antérieure.

La quantité d'acide isocyanurique présente dans la composition conforme à l'invention représente, de préférence, 0,3 à 0,8 % en poids de la masse de chlorure alcalin utilisée pour la préparation de l'eau à désinfecter.

La composition selon l'invention pourra être préparée de façon adaptée à son usage en réalisant un mélange intime du sel et de l'acide isocyanurique et elle pourra être commercialisée en l'état ou présentée sous forme de pastilles, comprimés, blocs, galets, pilules, compacts, agglomérés ou granulés, fabriqués par compression à sec dudit mélange.

La Demanderesse a établi que, sous ces présentations, le produit présente, entre autre, les avantages suivants (par rapport aux techniques et produits actuels) :
- solubilité totale,
- absence de résidus,
- homogénéité de la composition,
- régularité du dosage des composants dans la solution à traiter (suppression des erreurs de dosage),
- adaptation du produit à tous les types d'électrochlorateur,
- suppression des manipulations et du stockage de produits chimiques dangereux,
- innocuité totale en cas d'ingestion accidentelle du produit, en particulier par les enfants.

## Revendications

1. Composition pour la désinfection de l'eau par le procédé d'électrochloration, cette composition comprenant au moins un chlorure alcalin et étant caractérisée en ce qu'elle contient, comme agent stabilisant du chlore vis-à-vis du rayonnement ultra-violet, de l'acide isocyanurique.

2. Composition selon la revendication 1, caractérisée en ce que l'acide isocyanurique représente 0,3 à 0,8% en poids du chlorure alcalin.

3. Composition selon l'une des revendications 1 et 2, caractérisée en ce qu'elle se présente sous la forme d'un mélange intime d'au moins un chlorure alcalin et d'acide isocyanurique, éventuellement comprimé sous forme de pastilles, comprimés, blocs, galets, pilules, compacts agglomérés ou granulés.

4. Utilisation d'une composition selon l'une des revendications 1 à 3 pour la désinfection de l'eau par le procédé d'électrochloration.

## Claims

1. A composition for the disinfection of water by the electro-chlorination process, this composition comprising at least one alkaline chloride and being characterised in that it contains isocyanuric acid as a chlorine stabiliser with respect to ultra-violet radiation.

2. A composition according to claim 1, characterised in that the isocyanuric acid represents from 0.3 to 0.8% by weight of the alkaline chloride.

3. A composition according to either one of claims 1 and 2, characterised in that it is in the form of an intimate mixture of at least one alkaline chloride and isocyanuric acid, optionally compressed into the form of pellets, tablets, blocks, disks, pills or compacts, which may be agglomerated or granulated.

4. Use of a composition according to any one of claims 1 to 3 for the disinfection of water by the electro-chlorination process.

## Patentansprüche

1. Verbindung zur Desinfizierung von Wasser durch Elektrochlorierung, wobei diese Verbindung mindestens ein alkalisches Chlorid enthält, **dadurch gekennzeichnet,** daß sie als Mittel zum Stabilisieren des Chlor gegenüber ultravioletter Strahlung Isocyansäure enthält.

2. Verbindung nach Anspruch 1, **dadurch gekennzeichnet**, daß die Isocyansäure in einer Menge von 0,3 bis 0,8 Gew.%, bezogen auf das alkalische Chlorid, vorhanden ist.

3. Verbindung nach einem der Ansprüche 1 und 2, **dadurch gekennzeichnet,** daß sie in Form eines innigen Gemisches aus mindestens einem alkalischen Chlorid und Isocyansäure, gegebenenfalls in einer zu Plättchen, Preßkörpern, Blöcken, Scheibchen, Pillen, Preßlingen, Formlingen oder Granulat verdichteten Form, vorliegt.

4. Verwendung einer Verbindung nach einem der Ansprüche 1 bis 3 zur Desinfizierung von Wasser durch Elektrochlorierung.
